# EUROPÄISCHE PATENTANMELDUNG

(11) **EP 2 106 892 A1**
(43) Veröffentlichungstag der Anmeldung: **07.10.2009**
(21) Anmeldenummer: 08006869.5
(22) Anmeldetag: 04.04.2008
(51) Int. Cl.: B29B 13/02, B30B 15/06

(54) **Heizplatte für Werkstücke**

(71) Anmelder: Komax Holding AG, 6036 Dierikon (CH)
(72) Erfinder: Meisser, Claudio, 6330 Cham (CH); Bucher, Markus, 6033 Buchrain (CH)
(74) Vertreter: EGLI-EUROPEAN PATENT ATTORNEYS

(57) **Zusammenfassung**

Die Heizplatte (1) für Werkstücke umfasst einen heizbaren Körper (20), welcher auf einer ersten Seite eine Kontaktfläche (15) für das jeweilige Werkstück aufweist, mindestens einen mit einer Heizflüssigkeit gefüllten Heizkanal (25), welcher in oder an dem heizbaren Körper (20) gegenüber der Kontaktfläche (15) ausgebildet ist, und Heizmittel (30, 30.1) zum Heizen der Heizflüssigkeit. Die Heizmittel sind ausserhalb des jeweiligen Heizkanals (25) angeordnet, wobei Wärme, die mittels der Heizmittel (30, 30.1) erzeugbar ist, durch eine Kanalwand (25.1) des jeweiligen Heizkanals (25) in die Heizflüssigkeit einbringbar ist.

## Beschreibung

Die Erfindung bezieht sich auf eine Heizplatte für Werkstücke mit einem heizbaren Körper, welcher auf einer ersten Seite eine Kontaktfläche für das jeweilige Werkstück aufweist.

Heizplatten dieser Art werden beispielsweise zum Laminieren von Werkstücken verwendet und in diesem Zusammenhang insbesondere in Laminierpressen zur Herstellung von photovoltaischen Modulen eingesetzt. Beim Laminieren verbindet sich eine dünne, meist folienartige Schicht mit einem Trägermaterial. In vielen Fällen, beispielsweise bei der Herstellung von photovoltaischen Modulen, ist es notwendig, den Laminierprozess bei erhöhten Temperaturen durchzuführen (Heisslaminieren). Dabei wird in der Regel das zu verarbeitende Werkstück (d. h. das mit der zu verbindenden Schicht bedeckte Trägermaterial) an einer auf einer Heizplatte ausgebildeten Kontaktfläche für das Werkstück angeordnet, auf eine vorgegebene Temperatur erwärmt und anschliessend gepresst. Für den Laminierprozess ist es wichtig, dass die Temperaturverteilung an der Kontaktfläche für das jeweilige Werkstück möglichst gleichmässig ist.

Ein erster Typ von derartigen Heizplatten verfügt über meist stabförmige Heizeinrichtungen, die direkt an einem Heizplattenkörper angebracht sind. Da die Wärme über Wärmeleitung an den Heizplattenkörper abgegeben wird, ist ein möglichst guter Kontakt zwischen den jeweiligen Wärmequellen der Heizeinrichtungen und dem Heizplattenkörper notwendig. Dies wird durch das Einlegen der Heizeinrichtungen in genau gefertigte Nuten erreicht, wobei die Heizeinrichtungen eingeklemmt werden können und die Wärmeleitung durch das Aufbringen von Wärmeleitpaste zusätzlich verbessert werden kann. Allerdings ist es auch im optimalen Fall schwierig, eine gleichmässige Temperaturverteilung über eine grosse Fläche zu erreichen. Das ist nachteilig im Hinblick auf das Laminieren grossflächiger Werkstücke, beispielsweise zur Herstellung von photovoltaischen Modulen, welche eine Fläche von mehr als 1 m² aufweisen können.

Bei einem zweiten Typ von Heizplatten, wie er beispielsweise in EP1340611 A2 offenbart wird, sind Hohlräume vorgesehen, welche von einem flüssigen Wärmeträgermedium, das zur Erwärmung und/oder Abkühlung der jeweiligen Heizplatte dient, durchströmt werden. Das Aufheizen, die Abkühlung und die Temperaturregelung des Wärmeträgermediums erfolgt dabei ausserhalb der Heizplatte mittels eines Heizkreislaufs, welcher ein Heizaggregat umfasst, und eines Kühlkreislaufs, welcher mindestens einen Kühler aufweist. Das Heizaggregat und die jeweiligen Kühler für das Wärmeträgermedium sind dabei über verschiedene Leitungen an die jeweiligen Hohlräume der Heizplatte angeschlossen. Da das Wärmeträgermedium beim Strömen durch die üblicherweise relativ langen Hohlräume der Heizplatte viel Wärmeenergie abgibt bzw. aufnimmt, ist es auch bei diesem Typ von Heizplatten schwierig, die Temperatur über die gesamte Kontaktfläche für das jeweilige Werkstück konstant zu halten.

In EP1517585 B1 ist ein weiterer Typ von Heizplatten beschrieben, bei denen zum Heizen eine Heizflüssigkeit verwendet wird, die Hohlräume in der jeweiligen Heizplatte durchströmt. Die Heizflüssigkeit wird in diesem Fall durch Heizelemente erwärmt, die sich innerhalb der Hohlräume befinden und von der Heizflüssigkeit umströmt werden. Diese Lösung ist aufwändig, da die Heizelemente gegen die Flüssigkeit elektrisch isoliert und abgedichtet werden müssen. Weiterhin sind alle Heizelemente mit Abstandhaltern versehen, welche für eine Zentrierung der Heizelemente in den jeweiligen Hohlräumen sorgen, um eine direkte Berührung der Heizelemente mit den Wänden der Hohlräume zu verhindern. In diesem Fall ist es schwierig, derartige Heizelemente in Hohlräumen mit einer komplizierten Anordnung der Hohlraumwände unterzubringen, beispielsweise in einem System aus mehreren Hohlräumen, die relativ zueinander verwinkelt sind, oder in Hohlräumen, die mehrfach verzweigt sind. Die genannten Heizelemente können demnach unter Umständen nicht oder gegebenenfalls nur mit erheblichem Aufwand in Hohlräume mit einer komplizierten Anordnung der Hohlraumwände eingebaut werden. Dies ist nachteilig im Hinblick auf das Heizen von Heizplatten, die eine grosse Kontaktfläche aufweisen und zum Heizen grossflächiger Werkstücke dienen sollen.

Ausgehend von dem erwähnten Stand der Technik liegt der Erfindung die Aufgabe zugrunde, die genannten Nachteile zu vermeiden und eine Heizplatte zu schaffen, die mit einer Heizflüssigkeit heizbar ist und es ermöglicht, mit einfachen Mitteln eine möglichst konstante Temperatur an einer Kontaktfläche für das zu heizende Werkstück zu erzielen.

Diese Aufgabe wird durch eine Heizplatte mit den Merkmalen des Anspruchs 1 gelöst.

Diese Heizplatte umfasst einen heizbaren Körper, welcher auf einer ersten Seite eine Kontaktfläche für das jeweilige Werkstück aufweist, mindestens einen Heizkanal, welcher in oder an dem heizbaren Körper gegenüber der Kontaktfläche ausgebildet ist und mit einer Heizflüssigkeit gefüllt ist, und Heizmittel zum Heizen der Heizflüssigkeit.

Gemäss der Erfindung sind die Heizmittel ausserhalb des Heizkanals angeordnet, wobei Wärme, die mittels der Heizmittel erzeugbar ist, durch eine Kanalwand des jeweiligen Heizkanals in die Heizflüssigkeit einbringbar ist.

Dadurch, dass die Heizmittel ausserhalb des jeweiligen Heizkanals angeordnet sind, können die Heizmittel mit relativ wenig Aufwand am heizbaren Körper montiert werden. Dabei schränkt die jeweilige Anordnung bzw. Form des jeweiligen Heizkanals die Wahl der Orte, an denen die jeweiligen Heizmittel am heizbaren Körper platziert werden können, nicht bzw. nicht wesentlich ein, zumal Komplikationen, die mit dem Einbau von Heizmitteln in den jeweiligen Heizkanal verbunden wären, prinzipiell vermieden werden.

Dadurch, dass die Heizmittel erfindungsgemäss derart angeordnet sind, dass die Wärme, die mittels der Heizmittel erzeugbar ist, durch eine Kanalwand des jeweiligen Heizkanals in die Heizflüssigkeit einbringbar ist, und dadurch, dass der jeweilige Heizkanal gegenüber der Kontaktfläche für das Werkstück angeordnet ist, ist weiterhin gewährleistet, dass Wärmeverluste in der Heizflüssigkeit jeweils nahe an der Kontaktfläche für das Werkstück ausgeglichen werden können. Dadurch ist die Möglichkeit gegeben, eine gleichmässige Temperaturverteilung an der Kontaktfläche zu realisieren.

Im Rahmen der Erfindung kann die Temperaturverteilung an der Kontaktfläche durch verschiedene Massnahmen beeinflusst werden. Die Homogenität der Temperaturverteilung an der Kontaktfläche kann beispielsweise durch die räumliche Anordnung des jeweiligen Heizkanals bzw. der jeweiligen Heizkanäle und/oder die räumliche Anordnung der jeweiligen Heizmittel beeinflusst und entsprechend optimiert werden. Die Homogenität der Temperaturverteilung an der Kontaktfläche kann weiterhin durch eine gezielte Beeinflussung der räumlichen Verteilung des jeweiligen Wärmestroms, der in bestimmten Bereichen der jeweiligen Kanalwand in die Heizflüssigkeit eingebracht wird, beeinflusst und entsprechend optimiert werden. Um Temperaturdifferenzen zwischen verschiedenen Orten an der Kontaktfläche zu minimieren bzw. zu kompensieren, können beispielsweise eine Vielzahl von Heizeinrichtungen ausserhalb des jeweiligen Heizkanals bzw. der Heizkanäle angeordnet werden, wobei die Wärmeleistung, welche die einzelnen Heizeinrichtungen durch die jeweiligen Kanalwände an die Heizflüssigkeit abgeben, jeweils von Ort zu Ort variieren kann. Weiterhin können die jeweiligen Heizkanäle so ausgelegt werden, dass eine Zirkulation der Heizflüssigkeit in den jeweiligen Heizkanälen ermöglicht wird, gegebenenfalls erzwungen durch eine Pumpe, die für einen Fluss der Heizflüssigkeit durch die jeweiligen Heizkanäle sorgt. Auch diese Massnahme kann dazu beitragen, eine gleichmässige räumliche Verteilung der Temperatur an der Kontaktfläche zu erzielen.

Die Heizmittel der erfindungsgemässen Heizplatte können auf verschiedene Weisen realisiert werden.

Eine Ausführungsform der Heizplatte weist Heizmittel auf, die mindestens eine Heizeinrichtung mit jeweils mindestens einer an der jeweiligen Kanalwand angeordneten Wärmequelle umfassen, wobei die Heizflüssigkeit durch Wärmeleitung durch die Kanalwand erwärmbar ist. Als Wärmequelle ist beispielsweise eine elektrische Widerstandsheizung geeignet, wobei die Widerstandsheizung in Kontakt mit der Kanalwand gebracht werden kann.

Bei einer anderen Ausführungsform der Heizplatte ist vorgesehen, dass die jeweilige Kanalwand induktiv erwärmbar ist und die Heizmittel mindestens eine Heizeinrichtung zum induktiven Heizen der Kanalwand umfassen. Um eine induktive Heizung der Kanalwand zu ermöglichen, kann die Kanalwand aus einem elektrisch leitfähigen Material, beispielsweise einem Metall, gefertigt werden. Um die Effizienz der induktiven Heizung der Kanalwand zu optimieren, kann die Kanalwand aus einem magnetisierbaren Material, beispielsweise einem ferromagnetischen Material, insbesondere einem ferromagnetischen Metall wie Eisen oder einer Eisenlegierung (beispielsweise Stahl), gefertigt sein. Die jeweilige Heizeinrichtung zum induktiven Heizen der Kanalwand kann mit konventionellen Mitteln realisiert werden. Diese Heizeinrichtung hat den Vorteil, dass die Heizeinrichtung nicht in Kontakt mit der Kanalwand stehen muss, sondern in einem Abstand zur Kanalwand angeordnet werden kann. Dies vereinfacht die Montage der Heizeinrichtung.

Weitere Einzelheiten der Erfindung und insbesondere beispielhafte Ausführungsformen der Erfindung werden im Folgenden anhand der beigefügten Zeichnungen erläutert. Es zeigen:
- Fig. 1: einen Querschnitt durch eine erste Ausführungsform der erfindungsgemässen Heizplatte, mit einem heizbaren Körper, einem Heizkanal und Heizmitteln, welche Heizmittel mehrere Heizeinrichtungen mit jeweils einer an einer Kanalwand des Heizkanals angeordneten Wärmequelle umfassen;
- Fig. 2: einen Querschnitt durch eine zweite Ausführungsform der erfindungsgemässen Heizplatte, welche hinsichtlich der Konstruktion des heizbaren Körpers und des Heizkanals mit der Ausführungsform gemäss Fig. 1 identisch ist, wobei die Heizmittel allerdings mehrere Heizeinrichtungen zum induktiven Heizen der jeweiligen Kanalwände umfassen;
- Fig. 3: einen Querschnitt durch eine dritte Ausführungsform der erfindungsgemässen Heizplatte, mit Heizmitteln gemäss Fig. 1;
- Fig. 4: einen Querschnitt durch eine vierte Ausführungsform der erfindungsgemässen Heizplatte, mit Heizmitteln gemäss Fig. 2;
- Fig. 5: einen Querschnitt durch eine fünfte Ausführungsform der erfindungsgemässen Heizplatte, mit Heizmitteln gemäss Fig. 1;
- Fig. 6: einen Querschnitt durch eine sechste Ausführungsform der erfindungsgemässen Heizplatte, mit Heizmitteln gemäss Fig. 2;
- Fig. 7: einen Querschnitt durch eine siebte Ausführungsform der erfindungsgemässen Heizplatte, mit Heizmitteln gemäss Fig. 1;
- Fig. 8: einen Querschnitt durch eine achte Ausführungsform der erfindungsgemässen Heizplatte, mit Heizmitteln gemäss Fig. 2;
- Fig. 9: eine perspektivische Ansicht einer neunten Ausführungsform der erfindungsgemässen Heizplatte, dargestellt ohne Heizmittel;
- Fig. 10: eine perspektivische Ansicht eines Teils einer zehnten Ausführungsform der erfindungsgemässen Heizplatte, dargestellt ohne Heizmittel;
- Fig. 11: die Ausführungsform gemäss Fig. 10, mit Heizmitteln.

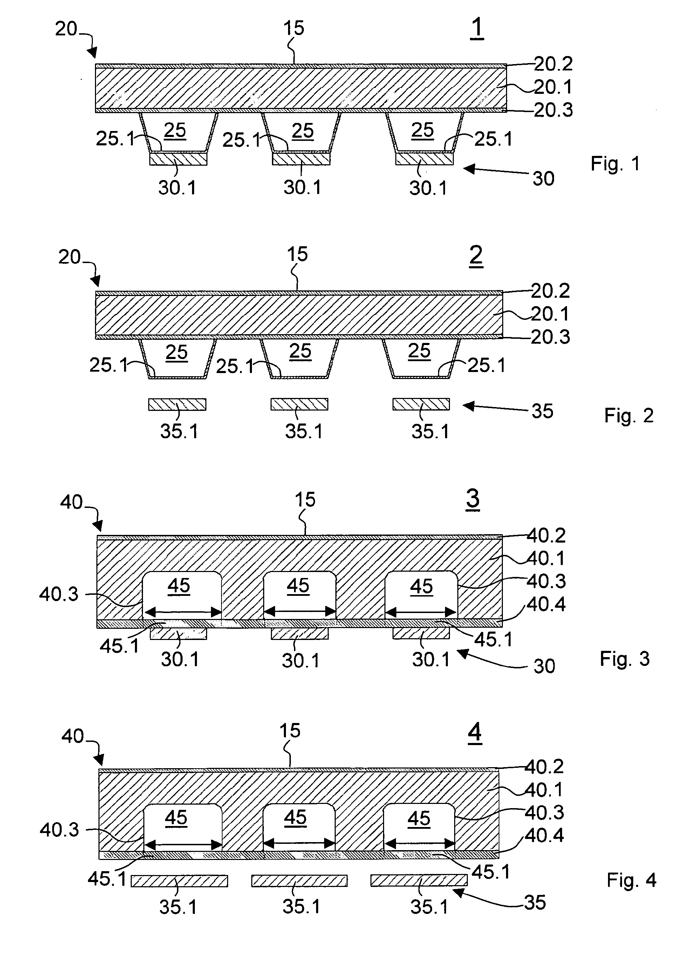

Fig. 1 zeigt einen Querschnitt durch eine Heizplatte 1, welche einen heizbaren Körper 20, einen mit einer Heizflüssigkeit gefüllten Heizkanal 25 und Heizmittel 30 zum Heizen der Heizflüssigkeit umfasst. Der heizbare Körper 20 hat auf einer Seite eine Kontaktfläche 15, mit welcher ein mittels der Heizplatte 1 zu heizendes Werkstück in Kontakt gebracht werden kann. Im vorliegenden Fall ist der heizbare Körper 20 als ebene Platte ausgebildet.

Der Heizkanal 25 ist an der der Kontaktfläche 15 gegenüber liegenden Seite des heizbaren Körpers 20 angeordnet. Um einen möglichst grossen Teil der Oberfläche des heizbaren Körpers in Kontakt mit der im Heizkanal 25 geführten Heizflüssigkeit zu bringen, weist der Heizkanal 25 eine Vielzahl verschiedener Längsabschnitte auf, von denen einige parallel zueinander und andere in einem rechten Winkel zueinander angeordnet sind, wobei die Längsabschnitte derart miteinander verbunden sind, dass die Heizflüssigkeit im Heizkanal 25 längs einer geschlossenen Bahn entlang der Oberfläche des heizbaren Körpers 20 zirkulieren kann.

Die Fig. 1 zeigt mehrere Längsabschnitte des Heizkanals 25 im Querschnitt. Die Kanalwand 25.1 des Heizkanals 25 weist im vorliegenden Fall im Querschnitt ein trapezförmiges Profil auf und ist an zwei Seiten jeweils mit dem heizbaren Körper 20 derart verbunden, dass der Heizkanal 25 für die Heizflüssigkeit dicht ist. Dabei kann die Kanalwand 25.1 beispielsweise als Blechkonstruktion ausgeführt sein. Die Befestigung der Kanalwand 25.1 am heizbaren Körper 20 kann beispielsweise durch Verschrauben oder durch eine Schweissverbindung erfolgen. Eine Schweissverbindung hat den Vorteil, dass keine Dichtung notwendig ist.

Die Heizmittel 30 umfassen mehrere Heizeinrichtungen 30.1 mit jeweils einer Wärmequelle. Als Wärmequelle kann beispielsweise ein elektrischer Widerstand dienen, welcher an eine elektrische Stromquelle angeschlossen ist. Jede Heizeinrichtung 30.1 ist formschlüssig an einer äusseren Seite der Kanalwand 25.1, d.h. ausserhalb des Heizkanals 25, angebracht. Die Heizmittel 30 erlauben es somit, die Kanalwand 25.1 in verschiedenen Bereichen von aussen aufzuheizen. Die Erwärmung der Heizflüssigkeit erfolgt durch Wärmeübergang von der erwärmten Kanalwand 25.1 zur Heizflüssigkeit. Die Wärme, die mittels der Heizmittel 30 erzeugbar ist, ist demnach von den Heizeinrichtungen 30.1 durch die Kanalwand 25.1 des Heizkanals 25 mittels Wärmeleitung in die Heizflüssigkeit einbringbar.

Der heizbare Körper 20 kann, wie Fig. 1 andeutet, mehrschichtig aufgebaut sein: Im vorliegenden Fall besteht der Körper 20 aus (i) einer ebenen Platte 20.1, (ii) einer ebenen Schicht 20.2, deren eine Seite die Kontaktfläche 15 bildet und deren andere Seite mit der Platte 20.1 an einer der Kontaktfläche 15 zugewandten Oberfläche der Platte 20.1 verbunden ist, und (iii) einer Schicht 20.3, die mit der Platte 20.1 an einer der Kontaktfläche 15 abgewandten Oberfläche der Platte 20.1 verbunden ist.

Der mehrschichtige Aufbau des heizbaren Körpers 20 ermöglicht insbesondere eine Optimierung hinsichtlich der mechanischen und wärmetechnischen Eigenschaften des Körpers 20. Generell ist es vorteilhaft, wenn die Platte 20.1 und die Schichten 20.2 und 20.3 eine möglichst hohe Wärmeleitfähigkeit und/oder ein möglichst geringes Gewicht aufweisen und/oder kostengünstig herstellbar sind. Die Platte 20.1 kann so ausgelegt werden, dass sie den grössten Teil des Volumens des Körpers 20 einnimmt und die mechanische Stabilität des Körpers 20 gewährleistet. Die Schicht 20.2 kann beispielsweise so ausgelegt werden, dass der heizbare Körper 20 an der Kontaktfläche 15 besonders verschleissfest ausgebildet ist. Die Schicht 20.3 kann wiederum so gewählt werden, dass die Herstellung einer Verbindung zwischen der Kanalwand 25.1 und dem Körper 20, beispielsweise mittels Schweissen, vereinfacht wird.

Für den heizbaren Körper 20 an sich und insbesondere für die Platte 20.1 ist Aluminium, aufgrund der guten Wärmeleitfähigkeit und des kleinen Gewichts, der geeignete Werkstoff. Auch die Verwendung von Kupfer ist denkbar. Die Schicht 20.2 kann beispielsweise aus Stahl gefertigt sein, um eine hohe Verschleissfestigkeit zu gewährleisten. Die Schicht 20.3 kann beispielsweise aus Kupfer oder Stahl bestehen. Derartige Schichten 20.2 und 20.3 lassen sich beispielsweise durch Sprengplattieren oder Hochdruckwalzen auf die Platte 20.1 aufbringen. Als geeigneter Werkstoff für die Kanalwand 25.1 kann im vorliegenden Fall beispielsweise Kupfer angesehen werden, um eine hohe Wärmeleitfähigkeit zu gewährleisten.

Fig. 2 zeigt eine Heizplatte 2, welche denselben heizbaren Körper 20 umfasst wie die Heizplatte 1 gemäss Fig. 1. Um ein Heizen der Heizflüssigkeit zu ermöglichen, umfasst die Heizplatte 2 Heizmittel 35, die ausserhalb des Heizkanals 25.1 angeordnet sind und mehrere Heizeinrichtungen 35.1 zum induktiven Heizen der Kanalwand 25.1 umfassen, wobei vorausgesetzt ist, dass die Kanalwand aus einem Werkstoff besteht, der induktiv erwärmbar ist. Im vorliegenden Fall kann die Kanalwand 25.1 beispielsweise aus einem elektrisch leitfähigen Material, beispielsweise aus einem Metall, und/oder aus einem magnetisierbaren Material, beispielsweise einem ferromagnetischen Material, insbesondere einem ferromagnetischen Metall wie Eisen oder einer Eisenlegierung (beispielsweise Stahl), gefertigt sein.

Wie Fig. 2 andeutet, müssen die Heizeinrichtungen 35.1 die Kanalwand 25.1 nicht berühren. Gegebenenfalls können sich zwischen dem Kanal 25 und den Heizeinrichtungen 35.1 Bauteile aus nicht magnetisierbarem Material oder aus Werkstoffen, die durch die Heizeinrichtungen 35.1 nicht oder nicht wesentlich aufgeheizt werden können und somit keinen wesentlichen Teil der Heizleistung der Heizeinrichtungen 35.1 absorbieren, befinden.

Die Fig. 3-8 zeigen Heizplatten 3, 4, 5, 6, 7 und 8, welche sich von den Heizplatten 1 und 2 gemäss Fig. 1 und 2 hauptsächlich durch verschiedene Realisierungen von Heizkanälen unterscheiden, wobei als Heizmittel wahlweise die Heizmittel 30 gemäss Fig. 1 oder die Heizmittel 35 gemäss Fig. 2 dienen können.

Die Heizplatte 3 gemäss Fig. 3 umfasst einen heizbaren Körper 40 mit einem Heizkanal 45. Der Körper 40 besteht aus: einer Platte 40.1, in der auf einer Seite eine meanderförmig ausgebildete Nut 40.3 ausgebildet ist; einer Schicht 40.2, welche mit der Platte 40.1 auf einer der Nut 40.3 gegenüber liegenden Seite verbunden ist und die Kontaktfläche 15 für ein zu heizendes Werkstück bildet; eine Abdeckplatte 40.4, welche die Nut 40.3 auf der der Kontaktfläche 15 gegenüber liegenden Seite abdeckt und dicht abschliesst. Der Heizkanal 45 ist dabei in der Nut 40.3 ausgebildet und jeweils durch die Platte 40.1 und die Abdeckplatte 40.4 begrenzt. Eine Heizflüssigkeit, mit welcher der Heizkanal gefüllt ist, kann im vorliegenden geheizt werden, indem Bereiche 45.1 der Abdeckplatte 40.4 (die Bereiche 45.1 sind in Fig. 3 durch gestrichelte Linien angedeutet und die Breite des jeweiligen Bereichs 45.1 ist in Fig. 3 durch einen Doppelpfeil gekennzeichnet) mittels Heizeinrichtungen 30.1 der Heizmittel 30 erwärmt werden. Wie Fig. 3 zeigt, sind die Heizeinrichtungen 30.1 ausserhalb der Kanäle 45 an der der Kontaktfläche 15 gegenüber liegenden Seite an der Abdeckplatte 40.4 derart befestigt, dass die Heizeinrichtungen 30.1 in Kontakt mit der Platte 40.4 sind. Die Bereiche 45.1 der Abdeckplatte 40.4 stellen im vorliegenden Fall "Kanalwände" im Sinne der Definition der Erfindung dar.

Die Abdeckplatte 40.4 kann nach verschiedenen Verfahren mit der Platte 40.1 verbunden werden, um den Kanal 45 dicht abzuschliessen, beispielsweise mittels Schweissen, Löten oder Verfahren zum Plattieren (beispielsweise Sprengplattieren oder Walzen). Die Abdeckplatte 40.4 könnte auch mit konventionellen Befestigungsmitteln wie Schrauben an der Platte 40.1 befestigt werden. In diesem Fall kann es gegebenenfalls nötig sein, den Kanal 45 mit geeigneten Dichtelementen abzudichten. Die Werkstoffe für die Platte 40.1, die Schicht 40.2 und die Abdeckplatte 40.4 können nach denselben (oben genannten) Grundsätzen gewählt werden wie die Werkstoffe für die entsprechenden Teile der Heizplatten 1 und 2 (d.h. Platte 20.1, die Schicht 20.2 und die Kanalwand 25.1) des heizbaren Körpers 20: die Platte 40.1 könnte beispielsweise aus Aluminium oder Kupfer, die Schicht 40.2 aus Stahl und die Abdeckplatte 40.4 aus Kupfer gefertigt werden.

Die Heizplatte 4 gemäss Fig. 4 ist hinsichtlich des strukturellen Aufbaus des heizbaren Körpers identisch mit der Heizplatte 3 und umfasst - wie die Heizplatte 3 - den heizbaren Körper 40. Im Unterschied zur Heizplatte 3 sind im Falle der Heizplatte 4 die Heizmittel 35 vorgesehen, um die Bereiche 45.1 der Abdeckplatte 40.4 induktiv zu heizen. Dementsprechend sind die Heizeinrichtungen 35.1 zum induktiven Heizen ausserhalb des Heizkanals 45 in einem Abstand zur Abdeckplatte 40.4 in der Nähe der Bereiche 45.1 angeordnet. Um die Effizienz des induktiven Heizens zu optimieren, kann der Werkstoff für die Abdeckplatte 40.4 im Falle der Heizplatte 4 nach den gleichen Grundsätzen gewählt werden wie der Werkstoff für die Kanalwand 25.1 der Heizplatte 2, d.h. die Abdeckplatte 40.4 kann beispielsweise aus einem elektrisch leitfähigen Material, beispielsweise aus einem Metall, und/oder aus einem magnetisierbaren Material, beispielsweise einem ferromagnetischen Material, insbesondere einem ferromagnetischen Metall wie Eisen oder einer Eisenlegierung (beispielsweise Stahl), gefertigt sein.

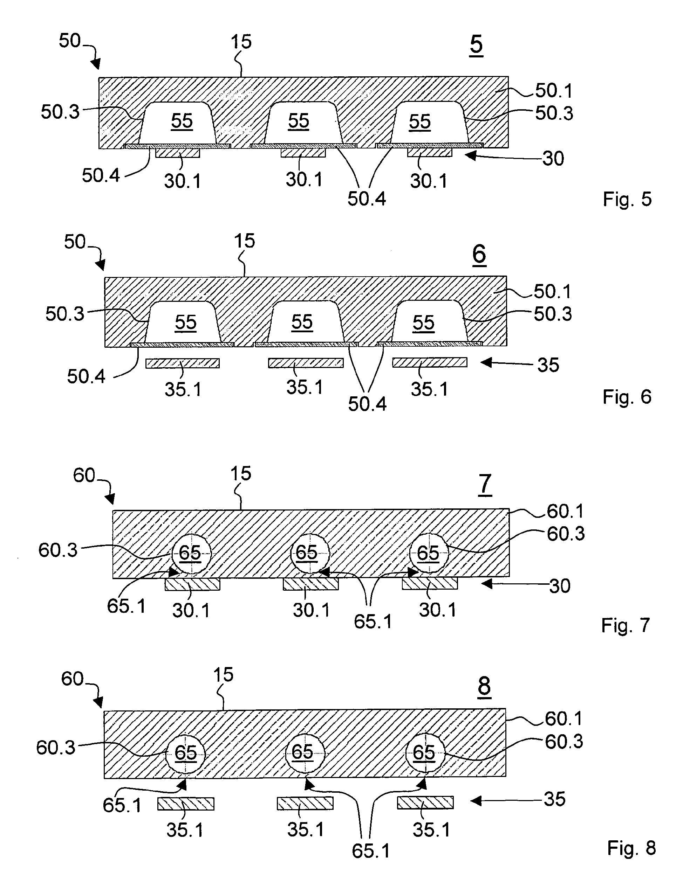

Die Heizplatte 5 gemäss Fig. 5 und die Heizplatte 6 gemäss Fig. 6 umfassen jeweils einen heizbaren Körper 50. Der heizbare Körper 50 umfasst eine Platte 50.1, an deren einen Seite die Kontaktfläche 15 angeordnet ist, wobei an der der Kontaktfläche 15 gegenüber liegenden Seite der Platte 50.1 eine Nut 50.3 ausgebildet ist, welche einen mit einer Heizflüssigkeit gefüllten Heizkanal 55 begrenzt. Der heizbare Körper 50 entspricht insofern strukturell dem heizbaren Körper 40, als der Heizkanal 55 in seiner Längsrichtung denselben Verlauf aufweist wie der Heizkanal 45 der Heizplatte 4. Im Unterschied zum Heizkanal 45 ist der Heizkanal 55 auf der von der Kontaktfläche 15 abgewandten Seite von einer Vielzahl von Abdeckplatten 50.4 bedeckt und dicht abgeschlossen. Jede der Abdeckplatten 50.4 bedeckt jeweils einen von mehreren Längsabschnitten der Nut 50.3. Die Abdeckplatten 50.4 können als schmale Blechstreifen ausgeführt sein und haben (quer zum jeweiligen Längsabschnitt des Heizkanals 55) eine Breite, die mindestens so gross oder grösser als die Breite des jeweiligen Längsabschnitts des Heizkanals 55 ist. Die Abdeckplatten 50.4 können mit der Platte 50.1 durch Schweissen oder Löten verbunden werden. Alternativ können die Abdeckplatten 50.4 an der Platte 50.4 mit Befestigungsmitteln wie Schrauben befestigt werden, wobei der Heizkanal 55 mit Dichtelementen gegen einen Austritt der Heizflüssigkeit abgedichtet werden kann.

Wie Fig. 5 zeigt, sind die Abdeckplatten 50.4 im Falle der Heizplatte 5 mit den Heizmitteln 30 heizbar, wobei an jeder der Abdeckplatten 50.4 eine Heizeinrichtung 30.1 derart befestigt ist, dass die Wärme, die von einer der Heizeinrichtungen 30.1 erzeugt wird, durch eine der Abdeckplatten 50.4 des Heizkanals 55 durch Wärmeleitung in die Heizflüssigkeit einbringbar ist. Die Abdeckplatte 50.4 stellen demnach im vorliegenden Fall "Kanalwände" im Sinne der Definition der Erfindung dar.

Im Falle der Heizplatte 6 gemäss Fig. 6 sind die Heizmittel 35 mit mehreren Heizeinrichtungen 35.1 zum induktiven Heizen der Abdeckplatten 50.4 vorgesehen, wobei die jeweilige Heizrichtung 35.1 ausserhalb des Heizkanals 55 in einem Abstand zur jeweiligen Abdeckplatte 50.4 angeordnet ist. Der Werkstoff der Abdeckplatten 50.4 kann wie der Werkstoff der Abdeckplatte 40.4 im Falle der Heizplatte 4 gewählt werden.

Die Heizplatte 7 gemäss Fig. 7 und die Heizplatte 8 gemäss Fig. 8 umfassen jeweils einen heizbaren Körper 60 mit einer Kontaktfläche 15 für ein Werkstück und mit einem Heizkanal 65, welcher mit einer Heizflüssigkeit gefüllt ist. Der Heizkanal 65 besteht aus einer Mehrzahl von Bohrungen 60.3, die gegenüber der Kontaktfläche 15 parallel zur Kontaktfläche 15 ausgebildet sind und derart miteinander verbunden sind, dass die Heizflüssigkeit im Heizkanal 65 parallel zur Kontaktfläche 15 zirkulieren kann. Die Heizflüssigkeit im Heizkanal 65 kann von der der Kontaktfläche 15 gegenüber liegenden Seite des heizbaren Körpers 60 her mit Heizeinrichtungen 30.1 der Heizmittel 30 (Fig. 7) oder mit Heizeinrichtungen 35.1 zum induktiven Heizen der Heizmittel 35 (Fig. 8) geheizt werden. Im vorliegenden Fall kann jeweils ein Bereich 65.1 der Platte 60.1, der zwischen einer der Bohrungen 60.3 und der der Kontaktfläche 15 gegenüber liegenden Oberfläche der Platte 60.1 ausgebildet ist, als "Kanalwand" im Sinne der Definition der Erfindung angesehen werden. Demgemäss sind die Heizeinrichtungen 30.1 der Heizeinrichtung 30 im Falle der Heizplatte 7 jeweils an einer der Kanalwände 65.1 befestigt, während die Heizeinrichtungen 35.1 der Heizeinrichtung 35 im Falle der Heizplatte 8 jeweils in einem Abstand zu einer der Kanalwände 65.1 angeordnet sind. Im Falle der Heizplatte 7 kann die Platte 60.1 beispielsweise aus Aluminium oder Kupfer gefertigt sein, während im Falle der Heizplatte 8 die Platte 60.1 aus einem elektrisch leitfähigen Material, beispielsweise aus einem Metall, und/oder aus einem magnetisierbaren Material, beispielsweise einem ferromagnetischen Material, insbesondere einem ferromagnetischen Metall wie Eisen oder einer Eisenlegierung (beispielsweise Stahl), gefertigt sein kann.

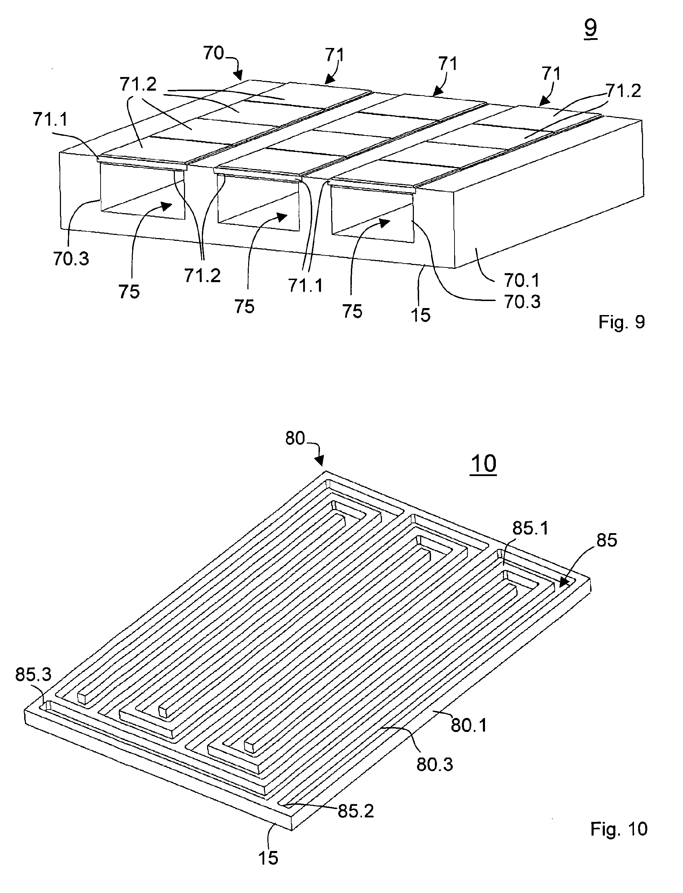

Fig. 9 Heizplatte zeigt eine Heizplatte 9, welche konzeptionell den Heizplatten 5 und 6 gemäss Fig. 5 und 6 ähnelt. Die Heizplatte 9 umfasst einen heizbaren Körper 70, der - ähnlich wie der heizbare Körper 50 - aus einer Platte 70.1 mit einer Kontaktfläche 15 für ein Werkstück und mit einem Heizkanal 75 besteht, wobei der Heizkanal 75 - ähnlich wie der Heizkanal 55 der Heizplatten 5 und 6 - in einer Nut 70.3 auf der der Kontaktfläche 15 gegenüber liegenden Seite der Platte 70.1 ausgebildet ist und mit einer Heizflüssigkeit gefüllt ist. Die Nut 70.3 ist dabei mit mehreren Abdeckplatten 71 abgedeckt, wobei jede Abdeckplatte 71 - ähnlich wie eine der Abdeckplatten 50.4 - einen Längsabschnitt der Nut 70.3 dicht verschliesst. Jede der Abdeckplatten stellt demnach eine "Kanalwand" im Sinne der Definition der Erfindung dar und kann - analog zu den Abdeckplatten 50.4 im Falle der Heizplatten 5 und 6 - beispielsweise mit Heizmitteln 30 oder 35 erwärmt werden, um eine Heizung der Heizflüssigkeit im Heizkanal 75 zu ermöglichen.

Die Abdeckplatten 71 unterscheiden sich von den Abdeckplatten 50.4 dadurch, dass die Abdeckplatten 71 mehrschichtig aufgebaut sind. Wie Fig. 9 andeutet, umfasst jede Abdeckplatte einen tragenden Teil 71.1 (in Form einer Platte), welcher an den Rändern mit der Platte 70.1 derart verbunden ist, dass der Kanal 75 gegen einen Austritt der Heizflüssigkeit abgedichtet ist. Der Werkstoff für den tragenden Teil 71.1 kann dabei so gewählt werden, dass der tragende Teil mit bestimmten Techniken, beispielsweise mit Schweissen oder Löten - besonders einfach und zuverlässig mit der Platte 70.1 verbunden werden kann. Im vorliegenden Fall könnten beispielsweise sowohl die Platte 70.1 und der tragenden Teil 71.1 der Abdeckplatte 70 aus Aluminium gefertigt sein, wobei durch diese Wahl der Werkstoffe sichergestellt ist, dass der tragenden Teil 71.1 der Abdeckplatte 70 durch Schweissen mit der Platte 70.1 verbunden werden kann. Die Abdeckplatte 70 kann auf einer Seite oder - wie in Fig. 9 dargestellt - sowohl auf der Seite des Kanals 75 und als auch auf der vom Kanal 75 abgewandten Seite mit einer Schicht 71.2 plattiert werden, wobei die Schicht 71.2 aus einem Werkstoff bestehen kann, der sich vom Werkstoff des tragenden Teils 71.1 unterscheidet.

Der mehrschichtige Aufbau der Abdeckplatten 71 ermöglicht es, durch geeignete Wahl der Werkstoffe für die verschiedenen Schichten, die Eigenschaften der Abdeckplatten 71 nach verschiedenen Gesichtspunkten zu optimieren. Der Werkstoff der jeweiligen Schicht 71.2 muss beispielsweise nicht unbedingt mittels Schweissen mit dem Werkstoff der Platte 70.1 verbindbar sein, zumal - wie erwähnt - im vorliegenden Fall eine belastbare Verbindung zwischen einer der Abdeckplatten 71 und der Platte 70.1 über eine Verbindung zwischen dem jeweiligen tragenden Teil 71.1 und der Platte 70.1 realisiert werden kann. Der Werkstoff der jeweiligen Schicht 71.2 kann hingegen beispielsweise so gewählt werden, dass die jeweilige Schicht 71.2 im Hinblick auf induktives Aufheizen optimiert ist. Dementsprechend kann die jeweilige Schicht 71.2 aus einem elektrisch leitfähigen Material, beispielsweise aus einem Metall, und/oder aus einem magnetisierbaren Material, beispielsweise einem ferromagnetischen Material, insbesondere einem ferromagnetischen Metall wie Eisen oder einer Eisenlegierung (beispielsweise Stahl), gefertigt sein kann.

Die tragenden Teile 71.1 müssen nicht unbedingt gleichmässig mit der Schicht 71.2 bedeckt sein. Wie Fig. 9 andeutet, weist jede Abdeckplatte 71 an der Oberfläche mehrere nebeneinander liegende Bereiche auf, an deren Grenzen jeweils verschiedene, nebeneinander angeordnete Schichten 71.2 voneinander separiert sind (in Fig. 9 sind jeweils verschiedene "Bereiche" mit jeweils voneinander separierten Schichten 71.2 durch einen durchgezogenen Strich getrennt und jeweils durch das Bezugszeichen 71.2 gekennzeichnet). Diese Separation der verschiedenen Schichten 71.2 ist hilfreich, um die Auswirkung der unterschiedlichen Wärmedehnungen verschiedener Werkstoffe zu reduzieren.

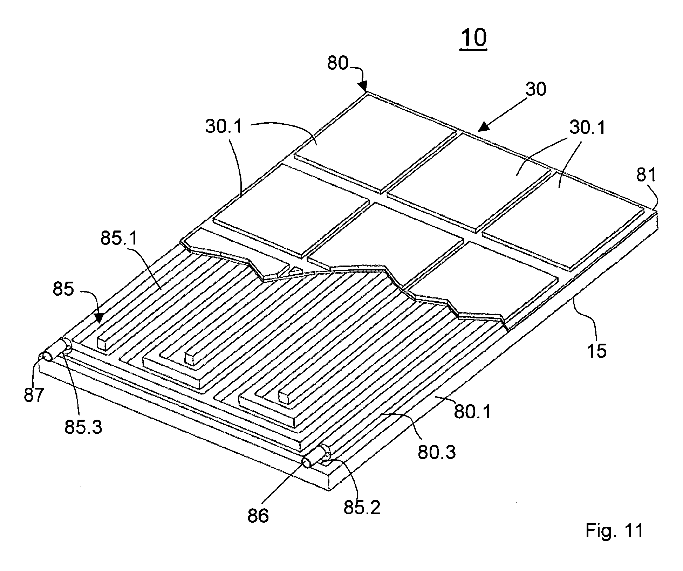

Fig. 10 und 11 zeigen eine Heizplatte 10, welche als Weiterentwicklung der Heizplatten 3 und 4 gemäss Fig. 3 und 4 angesehen werden kann. Die Heizplatte 10 umfasst einen heizbaren Körper 80 mit einer Kontaktfläche 15 für ein Werkstück und mit einem Heizkanal 85, welcher mit einer Heizflüssigkeit gefüllt ist.

Der heizbare Körper 80 besteht aus einer Platte 80.1, in der auf einer Seite eine meanderförmig ausgebildete Nut 80.3 ausgebildet ist, und einer Abdeckplatte 81, welche die Nut 80.3 auf der der Kontaktfläche 15 gegenüber liegenden Seite abdeckt und dicht abschliesst. Der Heizkanal 85 ist dabei in der Nut 80.3 ausgebildet und jeweils durch die Platte 80.1 und die Abdeckplatte 81 begrenzt. Diejenigen Bereiche der Abdeckplatte 81, die den Heizkanal 85 begrenzen, können jeweils als "Kanalwand" im Sinne der Definition der Erfindung angesehen werden.

Der Heizkanal 85 ist zusammengesetzt aus einer Vielzahl von Längsabschnitten, die miteinander verbunden sind und relativ zueinander entweder in einem rechten Winkel zueinander oder parallel nebeneinander angeordnet sind, wobei jeweils nebeneinander angeordneten Längsabschnitte des Heizkanals 85 durch eine Trennwand 85.1 getrennt sind. Der Heizkanal 85 weist ein erstes Kanalende 85.2 und ein zweites Kanalende 85.3 auf, wobei am ersten Kanalende 85.2 eine Eingangsöffnung 86 für die Heizflüssigkeit und am zweiten Kanalende 85.3 eine Ausgangsöffnung 87 für die Heizflüssigkeit angeordnet ist. Die Ausgangsöffnung 87 ist im Betrieb der Heizplatte 10 derart mittels einer (in Fig. 10 und 11 nicht dargestellten) Verbindungsleitung mit der Eingangsöffnung 86 verbunden, dass die Heizflüssigkeit in der Längsrichtung des Heizkanals 85 zirkulieren kann.

Wie Fig. 10 und 11 zu entnehmen ist, wird die Heizflüssigkeit im Heizkanal 85 derart geführt, dass die Heizflüssigkeit bei einer Zirkulation durch den Heizkanal 85 zwei benachbarte Längsabschnitte des Heizkanals 85 jeweils in entgegengesetzten Richtung durchströmt (Gegenstromprinzip). Diese Art der Führung der Heizflüssigkeit begünstigt einen Temperaturausgleich im Heizkanal 85 und in der Platte 80.1 und ist demnach hilfreich, um eine möglichst gleichmässige Temperaturverteilung an der Kontaktfläche 15 zu erzielen.

Zum Heizen der Heizflüssigkeit sind im vorliegenden Beispiel die Heizmittel 30 mit mehreren Heizeinrichtungen 30.1 vorgesehen. Die Heizeinrichtungen 30.1 sind an der Oberfläche der Abdeckplatte 81 nahezu flächendeckend angeordnet. Die Grösse der Heizeinrichtungen 30.1 ist dabei so bemessen, dass die Abdeckplatte 81 in jeder von zwei Dimensionen jeweils von mehreren Heizeinrichtungen 30.1 bedeckt wird.

Durch diese flächendeckende Anordnung der Heizeinrichtungen 30.1 in zwei Dimensionen wird beispielsweise erreicht, dass mehrere Heizeinrichtungen 30.1 an der jeweiligen Kanalwand über mehrere Bereiche der Kanalwand verteilt angeordnet sind, wobei jeweils verschiedene Bereiche der Kanalwand mit jeweils verschiedenen Heizeinrichtungen 30.1 beheizbar sind.

Weiterhin kann erreicht werden, dass eine einzelne Heizeinrichtung 30.1 (bedingt durch den von dieser Heizeinrichtung ausgehenden Wärmestrom) die Heizflüssigkeit gleichzeitig in einer Mehrzahl von (beispielsweise nebeneinander angeordneten) Abschnitten des Heizkanals 85 aufheizen kann, indem der von einer einzelnen Heizeinrichtung 30.1 ausgehende Wärmestrom gleichzeitig über mehrere nebeneinander angeordneten Längsabschnitte des Heizkanals 85 verteilt in die Heizflüssigkeit eingeleitet wird.

Durch die vorstehend genannten Massnahmen können lokale Wärmeverluste, die in der Heizflüssigkeit beim Strömen durch den Heizkanal 85 auftreten können, ausgeglichen werden.

Weiterhin besteht die Möglichkeit, die Heizleistungen (Wärmeströme) der jeweiligen Heizeinrichtungen 30.1 jeweils unabhängig voneinander zu regulieren. Auf diese Weise können die Wärmeströme, die von verschiedenen Heizeinrichtungen 30.1 durch die Abdeckplatte 81 in die Heizflüssigkeit eingeleitet werden, in zwei Dimensionen abhängig von dem jeweiligen Ort kontrolliert werden. Um die von den Heizeinrichtungen 30.1 ausgehenden Wärmeströme so zu steuern, dass an der Kontaktfläche 15 eine vorgegebene Temperaturverteilung erzielt wird, ist es weiterhin möglich, die momentane Temperaturverteilung mit Sensoren zu messen und, falls Abweichungen zwischen der momentanen Temperaturverteilung und der vorgegebenen Temperaturverteilung auftreten, diese Abweichungen durch eine Steuerung der jeweils von einer der Heizeinrichtungen 30.1 ausgehenden Wärmeströme zu beseitigen oder wenigstens zu minimieren.

Der Heizkanal 85 der Heizplatte 10 kann im Rahmen der Erfindung ohne weiteres modifiziert werden: Er könnte beispielsweise durch mehrere Kanalabschnitte, die zueinander parallel geschaltet sind oder verzweigt sind, oder durch mehrere getrennte Heizkanäle ersetzt werden.

Weiterhin können im Falle der Heizplatte 10 die Heizmittel 30 durch Heizmittel 35 mit mehreren Heizeinrichtungen 35.1 zum induktiven Heizen ersetzt werden, wobei jede Heizeinrichtung 35.1 die Abdeckplatte 81 im Bereich mehrerer (nebeneinander angeordneter) Längsabschnitte des Heizkanals induktiv 85 aufheizen kann.

## Patentansprüche

1. Heizplatte (1, 2, 3, 4, 5, 6, 7, 8, 9, 10) für Werkstücke,
mit einem heizbaren Körper (20, 40, 50, 60, 70, 80), welcher auf einer ersten Seite eine Kontaktfläche (15) für das jeweilige Werkstück aufweist,
mit mindestens einem mit einer Heizflüssigkeit gefüllten Heizkanal (25, 45, 55, 65, 75, 85), welcher in oder an dem heizbaren Körper (20, 40, 50, 60, 70, 80) gegenüber der Kontaktfläche (15) ausgebildet ist, und
mit Heizmitteln (30, 35) zum Heizen der Heizflüssigkeit,
**dadurch gekennzeichnet, dass**
die Heizmittel (30, 35) ausserhalb des jeweiligen Heizkanals (25, 45, 55, 65, 75, 85) angeordnet sind, wobei Wärme, die mittels der Heizmittel (30, 35) erzeugbar ist, durch eine Kanalwand (25.1, 45.1, 50.4, 65.1, 71, 81) des jeweiligen Heizkanals in die Heizflüssigkeit einbringbar ist.

2. Heizplatte (1, 3, 5, 7, 10) nach Anspruch 1, wobei
die Heizmittel (30) mindestens eine Heizeinrichtung (30.1) mit jeweils mindestens einer an der Kanalwand (25.1, 45.1, 50.4, 65.1, 81) angeordneten Wärmequelle umfassen und
die Heizflüssigkeit durch Wärmeleitung durch die Kanalwand (25.1, 45.1, 50.4, 65.1, 81) erwärmbar ist.

3. Heizplatte (2, 4, 6, 8) nach Anspruch 1, wobei die Kanalwand (25.1, 45.1, 50.4, 65.1) induktiv erwärmbar ist und die Heizmittel (35) mindestens eine Heizeinrichtung (35.1) zum induktiven Heizen der Kanalwand umfassen.

4. Heizplatte (1, 2, 3, 4) nach einem der Ansprüche 1-3, wobei
der heizbare Körper (20, 40) mehrere Schichten (20.1, 20.2, 20.3, 40.1, 40.2) aufweist und mindestens eine der Schichten (20.1, 40.1) aus Kupfer oder Aluminium besteht.

5. Heizplatte (1, 2, 3, 4) nach Anspruch 4, wobei auf die jeweilige Schicht (20.1, 40.1) aus Kupfer oder Aluminium eine oder mehrere Schichten (20.1, 20.3, 40.2, 40.4)aus Stahl durch Sprengplattieren aufgebracht sind.

6. Heizplatte (1, 2) nach einem der Ansprüche 1-5, wobei der heizbare Körper (20) auf einer der Kontaktfläche (15) gegenüber liegenden zweiten Seite eine ebene Oberfläche aufweist und die Kanalwand (25.1) aus einem Teil gebildet ist, welches mit der ebenen Oberfläche dicht verbunden ist.

7. Heizplatte (3, 4, 5, 6, 9, 10) nach einem der Ansprüche 1-5, wobei der heizbare Körper (40, 50, 70, 80) auf einer der Kontaktfläche (15) gegenüber liegenden zweiten Seite mindestens eine Nut (40.3, 50.3, 70.3, 80.3) aufweist und der jeweilige Heizkanal (45, 55, 75, 85) in der Nut (40.3, 50.3, 70.3, 80.3) ausgebildet ist, wobei die Kanalwand des jeweiligen Heizkanals (45, 55, 75, 85) von einer Abdeckplatte (40.4, 50.4, 71, 81) gebildet ist, welche die Nut (40.3, 50.3, 70.3, 80.3) abdeckt und am heizbaren Körper (40, 50, 70, 80) derart befestigt ist, dass der jeweilige Heizkanal (45, 55, 75, 85) auf der zweiten Seite des heizbaren Körpers durch die Abdeckplatte (40.4, 50.4, 71, 81) dicht abgeschlossen ist.

8. Heizplatte (3, 4, 10) nach Anspruch 7, wobei
der heizbare Körper (40, 80) mehrere nebeneinander angeordnete Nuten und/oder mehrere nebeneinander angeordnete Abschnitte einer Nut (40.3, 80.3) aufweist und die Abdeckplatte (40.4, 81) die nebeneinander angeordneten Nuten und/oder die nebeneinander angeordneten Abschnitte der einen Nut (40.3, 80.3) abdeckt, und
wobei die jeweilige Nut (40.3, 80.3) jeweils einen Heizkanal (45, 85) begrenzt und die Abdeckplatte (40.4, 81) derart am heizbaren Körper (40, 80) befestigt ist, dass die Abdeckplatte (40, 80) mehrere nebeneinander angeordnete Heizkanäle und/oder mehrere nebeneinander angeordnete Abschnitte eines Heizkanals (45, 85) dicht abschliesst.

9. Heizplatte (2, 4, 6, 8, 9, 10) nach einem der Ansprüche 1 - 8, wobei die Kanalwand (25.1, 45.1, 50.4, 71, 81) aus einem magnetisierbaren Werkstoff, beispielsweise aus einem ferromagnetischen Werkstoff, gebildet ist.

10. Heizplatte (9) nach einem der Ansprüche 1-9, wobei die Kanalwand (71) in einem oder mehreren Bereichen jeweils mehrere Schichten (71.1, 71.2) umfasst und mindestens eine der Schichten (71.2) in dem jeweiligen Bereich aus einem magnetisierbaren Werkstoff, beispielsweise aus einem ferromagnetischen Werkstoff, gebildet ist.

11. Heizplatte (10) nach einem der Ansprüche 2-10, wobei die Heizplatte mehrere nebeneinander angeordnete Heizkanäle und/oder mehrere nebeneinander angeordnete Abschnitte eines Heizkanals (85) aufweist und die jeweilige Heizeinrichtung (30.1) bezüglich jeweils nebeneinander angeordneten Heizkanälen und/oder bezüglich der jeweils nebeneinander angeordneten Abschnitte des einen Heizkanals (85) derart angeordnet ist, dass die Heizflüssigkeit in einer Mehrzahl der Heizkanäle und/oder in einer Mehrzahl der Abschnitte des einen Heizkanals (85) mittels dieser Heizeinrichtung (30.1) aufheizbar ist.

12. Heizplatte (1, 2, 3, 4, 5, 6, 7, 8, 9, 10) nach einem der Ansprüche 1-11, wobei die Heizmittel (30, 35) mehrere Heizeinrichtungen (30.1, 30.2) umfassen, die an der jeweiligen Kanalwand (25.1, 45.1, 50.4, 65.1, 71, 81) über mehrere Bereiche der Kanalwand verteilt angeordnet sind, wobei verschiedene Bereiche der Kanalwand mit jeweils verschiedenen Heizeinrichtungen (30.1, 35.1) beheizbar sind.

13. Heizplatte (10) nach Anspruch 12, wobei die Heizleistungen der jeweiligen Heizeinrichtungen (30.1) jeweils unabhängig voneinander regulierbar sind.
